# EUROPÄISCHE PATENTSCHRIFT

(11) **EP 2 056 432 B1**
(45) Veröffentlichungstag und Bekanntmachung des Hinweises auf die Patenterteilung: **15.04.2015**
(21) Anmeldenummer: 07021100.8
(22) Anmeldetag: 29.10.2007
(51) Int. Cl.: H02K 49/10, F04D 13/02

(54) **Magnetische Kupplung**
Magnetic clutch
Embrayage magnétique

(43) Veröffentlichungstag der Anmeldung: 06.05.2009
(73) Patentinhaber: Grundfos Management A/S, 8850 Bjerringbro (DK)
(72) Erfinder: Grann, Helge, 8850 Bjerringbro (DK); Lisbjerg Pedersen, Alfred, 8850 Bjerringbro (DK)
(74) Vertreter: Hemmer, Arnd

(56) Entgegenhaltungen:
- EP-A- 1 439 626
- DE-A1-102004 026 453
- DE-T2- 69 612 834
- US-A- 4 775 291
- US-A1- 2002 180 295
- US-A1- 2003 137 203
- US-A1- 2006 290 218
- US-B2- 7 057 320

## Beschreibung

Die Erfindung betrifft eine magnetische Kupplung gemäß den im Oberbegriff des Anspruchs 1 angegebenen Merkmalen.

Magnetische Kupplungen der eingangs genannten Art werden eingesetzt, um z. B. die Rotation einer Antriebswelle berührungsfrei auf eine Abtriebswelle zu übertragen. Eine solche Kupplung besteht typischerweise aus einem inneren Kupplungsteil und einem äußeren Kupplungsteil, die jeweils für sich in einem vorzugsweise hermetisch abgeschlossenen Gehäuse angeordnet sind. Dabei weist der innere Kupplungsteil einen inneren Stützkörper auf, der über seinen Außenumfang verteilt Magnete trägt, die von einem geschlossenen Blechmantel als Gehäuse umgeben sind. Der äußere Kupplungsteil weist einen ringförmigen Stützkörper auf, der an seiner Innenseite über den gesamten Umfang mit Magneten bestückt ist und der ebenfalls durch ein mantelartiges Gehäuse gekapselt ist.

Um eine möglichst hohe Momentenübertragung zu erreichen, ist es erstrebenswert, die Konstruktion so auszubilden, dass der Abstand der Magnete zwischen innerem und äußerem Stützkörper möglichst klein ist. Um dies zu erreichen, sind Stützkörper, Magnete und Gehäuse exakt aufeinander auszurichten. Dies erfolgt beim Stand der Technik dadurch, dass die Magnete durch Kleben auf dem Stützkörper befestigt werden, bevor der umgebende Gehäusemantel montiert wird. Einerseits soll der Abstand der Magnete zum umgebenden Gehäusemantel möglichst gering sein, um eine hohe magnetische Kraftentfaltung nach außen zu gewährleisten, andererseits soll zwischen den Magneten und dem Gehäusemantel ein Spalt verbleiben, um diesen überhaupt montieren zu können.

Bei bekannten Magnetkupplungen, wie sie beispielsweise aus US 7,057,320 B2 bekannt sind, sind die Magnete daher beim inneren Kupplungsteil im Querschnitt nach außen hin gerundet geformt, um so über die gesamte Fläche des Magneten einen möglichst konstanten und geringen Abstand zum Gehäusemantel erzielen zu können. Entsprechend sind die Magnete des äußeren Kupplungsteils im Querschnitt nach innen hin eingezogen ausgebildet, um auch hier einen möglichst konstanten Abstand zum Gehäusemantel zu erzielen.

Nachteilig bei dieser bekannten Magnetkupplung ist, dass deren Herstellung recht aufwändig ist, da die Magnete sorgfältig am Stützkörper verklebt werden müssen und darüber hinaus mit einer einachsigen Wölbung versehen sein müssen, die etwa dem Durchmesser des Gehäusemantels an dieser Seite entspricht.

Aus US 2006/0290218 A1 zählt es zum Stand der Technik, bei dem inneren Kupplungsteil die Magnete am Stützkörper mittels einer ringförmigen Wand festzulegen, die im Bereich der Magnete Einbuchtungen aufweist, und mit diesen die Magnete gegenüber dem Stützkörper klemmzubefestigen. Die dort beschriebene Konstruktion hat zwar den Vorteil, dass quaderförmige Magnete eingesetzt werden können, allerdings ist die Ausbildung der äußeren Gehäusewand fertigungstechnisch aufwendig und die Montage kompliziert.

Insoweit günstiger ist die aus DE 696 12 834 T2 bekannte magnetische Kupplung, bei welcher quaderförmige Magnete eingesetzt werden, die, soweit sie den inneren Kupplungsteil betreffen, zwischen einem inneren Stützkörper und einer äußeren Gehäusewand angeordnet sind und die, soweit sie den äußeren Kupplungsteil betreffen, zwischen einem äußeren Stützkörper und einer inneren Gehäusewand angeordnet sind.

Aus US 4,775,291 ist eine magnetische Kupplung bekannt, bei welcher der innere Kupplungsteil ebenfalls quaderförmige Magnete aufweist, die in Nuten des Stützkörpers eingegliedert sind und die durch die umlaufende äußere Gehäusewandung in dieser Position gehalten werden.

Die aus US 4,775,291 bekannte Kupplung weist darüber hinaus einen äußeren Kupplungsteil auf, der zwar ebenfalls quaderförmige Magnete hat, die jedoch an der Innenseite des ringförmig außen umlaufenden Tragkörpers durch Kleben befestigt und durch aus Aluminium bestehende Abstandshalter positioniert sind. Die innere Gehäusewandung ist mit Abstand dazu angeordnet.

Vor diesem Hintergrund liegt der vorliegenden Erfindung die Aufgabe zugrunde, eine gattungsgemäße Magnetkupplung wie sie aus US 4,775,291 bekannt ist, dahingehend zu verbessern, dass einerseits die Herstellungs- und Montagekosten gesenkt und andererseits das übertragbare Moment erhöht wird.

Diese Aufgabe wird gemäß der Erfindung durch die im kennzeichnenden Teil des Anspruchs 1 angegebenen Merkmale gelöst. Vorteilhafte Ausgestaltungen der Erfindung sind in den Unteransprüchen, der nachfolgenden Beschreibung und der Zeichnung angegeben.

Gemäß der Erfindung weist die magnetische Kupplung eine Vielzahl von Permanentmagneten auf, die längs des Umfangs einer Gehäusewand angeordnet sind, wobei die Magnete kraftschlüssig an der Gehäusewand anliegen. Grundgedanke der vorliegenden Erfindung ist es somit, die Magnete nicht, wie beim Stand der Technik, durch eine Verbindung zwischen Stützkörper und Magneten zu fixieren, sondern mithilfe der Gehäusewand selbst. Da die Gehäusewand typischerweise als dünner Edelstahlmantel ausgebildet ist, kann diese beispielsweise in gedehntem Zustand über Magnete und Stützkörper gezogen und dann entspannt werden, so dass die Eigenspannung der Gehäusewand den Kraftschluss zwischen Magneten, Gehäusewand und Stützkörper herstellt. Die Magneten brauchen daher nur unmittelbar vor der Montage in ihre bestimmungsgemäße Position gebracht zu werden, danach sind sie durch die Gehäusewand stets sicher gehalten, und zwar nicht nur durch den ohnehin gegebenen Formschluss, sondern durch Kraftschluss. Sie liegen somit spielfrei zwischen Stützkörper und Gehäusewand.

Die erfindungsgemäße Kupplung weist einen inneren Kupplungsteil auf, bei welchem ein innerer Stützkörper vorgesehen ist, bei welchem ein innerer Stützkörper vorgesehen ist, auf dessen Außenumfang die Magnete angeordnet sind und die radial nach außen hin an der Innenseite der diese umgebenden und form- und kraftschlüssig haltenden Gehäusewand anliegen. Dann sind die Magnete zwischen dem inneren Stützkörper und der Innenseite der äußeren Gehäusewand eingespannt. Die magnetische Kraft ist also von der äußeren Gehäusewand nach außen gerichtet.

Die erfindungsgemäße Kupplung weist einen äußeren Kupplungsteil auf, bei welchem die Magnete an der Innenseite der inneren Gehäusewand angeordnet und zwischen dieser und einem äußeren Stützkörper eingespannt sind. Bei einer solchen Anordnung ist die magnetische Kraft von der inneren Gehäusewand zur Längsmittelachse des Gehäuses gerichtet.

Der Stützkörper ist ringförmig ausgebildet und kann zur Steigerung der magnetischen Kräfte magnetisch leitend ausgebildet sein. Es kann jedoch auch ein Kunststoff- oder anderes Bauteil Verwendung finden. Die ringförmige Ausbildung führt zu einer deutlichen Gewichtsersparnis und ist insbesondere für den inneren Kupplungsteil vorteilhaft anwendbar. Beim äußeren Kupplungsteil ist der Stützkörper zumindest im Bereich der Magnete ringförmig, er kann jedoch auch topfförmig oder in anderer Weise gebildet sein.

Bei der erfindungsgemäßen Kupplung sind die Magnete im Wesentlichen quaderförmig ausgebildet. Auf eine nach außen oder innen hin gekrümmte Form kann verzichtet werden, ohne die Kraftübertragung der Kupplung zu schwächen. Dies hat den Vorteil, dass keine Anpassung der Magnete an die Gehäuseform erforderlich ist. Es können somit kostengünstige Magnete aus der Massenfertigung Verwendung finden.

Bei quaderförmiger Ausbildung der Magnete liegen diese z. B. beim inneren Kupplungsteil mit einer Seite flächig am inneren Stützkörper und mit zwei parallel zur Längsmittelachse der Antriebsanordnung angeordneten äußeren Kanten an der Innenseite der Gehäusewand an, und zwar an der äußeren Gehäusewand. Dadurch, dass die Magnete nur mit ihren Kanten an der Gehäusewand anliegen, kann auf den sonst üblichen, insbesondere zu Montagezwecken erforderlichen Spalt völlig verzichtet werden. Der Gehäusemantel kann vorgespannt über den mit Magneten bestückten inneren Stützkörper gezogen werden, so dass dieser nach Entspannung elastisch rückfedert und auf die Kanten der Magnete drückt und diese damit in ihrer bestimmungsgemäßen Position am Stützkörper festhält.

Gemäß der Erfindung werden auch für den äußeren Kupplungsteil quaderförmige Magnete eingesetzt, wobei diese dann nach außen hin flächig am Stützkörper anliegen und nach innen hin eine etwa linienförmige Berührung mit der Innenseite der inneren Gehäusewand aufweisen. Auch hier tritt ein vergleichbarer, jedoch in Kraftrichtung umgekehrter Effekt ein, d. h. die Vorspannung der inneren Gehäusewand drückt etwa jeweils in der Mitte auf die Magnete, die sich flächig im äußeren Stützkörper abstützen.

Gemäß der Erfindung sind im Stützkörper Ausnehmungen für die Magnete vorgesehen. Dabei sind die Ausnehmungen in Form von Nuten im Stützkörper vorgesehen, die sich parallel zur Längsmittelachse der Kupplung erstrecken und die zur formschlüssigen Aufnahme der Magnete vorgesehen sind. Eine solche Nutanordnung hat den Vorteil, dass eine Ausnehmung, also eine Nut, zur Anordnung mehrerer Magnete dient, da nämlich gemäß der Erfindung in einer Nut zwei oder mehr Magnete in Längsrichtung der Nut hintereinander angeordnet sind. Bei dieser Anordnung sind alle Magnete in einer Nut gleich gepolt. Das bedeutet in einer Nut sind alle Magnete so gepolt, dass ihr Nordpol radial innen liegt und ihr Südpol radial außen liegt, während in der nächsten benachbarten Nut vorzugsweise alle Magnete so angeordnet sind, dass ihr Südpol radial innen liegt und ihr Nordpol radial außen liegt. So sind die Magnete über den Umfang abwechselnd gepolt, jedoch innerhalb einer Nut immer gleich gepolt. Eine solche Anordnung hat weiterhin den Vorteil, dass bei Kupplungen, die große Momente übertragen müssen und daher verhältnismäßig lang ausgebildet sind, keine Sondermagnete eingesetzt werden müssen, sondern handelsübliche, quaderförmige Magnete Verwendung finden können, die dann in entsprechender Anzahl hintereinander in der jeweiligen Nut angeordnet werden.

Grundsätzlich sind gemäß der Erfindung die Magnete durch die Vorspannung der Gehäusewand kraftschlüssig am bzw. im Stützkörper gehalten. Dies schließt jedoch nicht aus, dass zu Montagezwecken Hilfsmittel vorgesehen sind, welche die Magnete so lange am Stützkörper fixieren, bis diese durch die Gehäusewand gehalten werden. Diese Hilfsmittel können je nach Anwendung nach Anbringen der Gehäusewand entfernt werden oder auch dort verbleiben. Solche Hilfsmittel gemäß der Erfindung können beispielsweise elastische Stege sein, welche in Umfangsrichtung zwischen den Magneten angeordnet sind und mit denen die Magnete in einem vorbestimmten Abstand angeordnet und in dieser Position am Stützkörper gehaltert sind. Solche Hilfsmittel können jedoch auch mechanische Halterungen sein, die nach Anbringen der Gehäusewand wieder entfernt werden, also die Magnete nach Art eines Greifers während der Montage halten.

Beim Einsatz der vorgenannten elastischen Stege ist es besonders vorteilhaft, wenn diese fest mit dem Stützkörper verbunden sind, vorzugsweise einstückig mit diesem als Kunststoffspritzgussteil ausgebildet sind. Dann können die Magnete in einfacher Weise zwischen diesen am Stützkörper befindlichen elastischen Stege eingegliedert werden, wobei der Abstand der Stege vorzugsweise etwas kleiner als die lichte Weite der Magnete in diesem Bereich ist, damit die Magnete durch Kraftschluss zwischen den Stegen gehalten werden können.

Wenn die Magnete innerhalb des Stützkörpers in einer Ausnehmung liegen, also beispielsweise einer Nut, dann ist es von Vorteil, wenn ein Magnet mit maximal 20 % seiner radialen Erstreckung innerhalb der Ausnehmung liegt und im Übrigen, also mit minimal 80 % seiner radialen Erstreckung diese überragt, also vom Außen- bzw. Innenumfang des Stützkörpers radial vorsteht. Da Magnete typischerweise feuchtigkeitsempfindlich sind, ist gemäß einer Weiterbildung der Erfindung vorgesehen, dass die Wand Teil eines die Magnete und vorteilhaft auch den Stützkörper hermetisch umgebenden Gehäuses ist. Ein solches Gehäuse besteht vorzugsweise aus Edelstahlblech, wobei die Stahllegierung insbesondere hinsichtlich der Korrosionsbeständigkeit auf die zu erwartenden Umgebungsmedien abgestimmt ist.

Um eine Drehmomentübertragung zwischen Stützkörper und einer Antriebs- oder Abtriebswelle zu gewährleisten, sind Stützkörper und Welle drehfest mechanisch miteinander zu verbinden. Dabei ist es insbesondere aus Gewichts- und Materialersparnisgründen vorteilhaft, den Stützkörper nicht unmittelbar mit der Welle zu verbinden, sondern den Stützkörper vorteilhaft über stirnseitig angeordnete Kraftübertragungsmittel mit einer Nabe zu verbinden, die dann auf einer Welle sitzt. Für eine Antriebsanordnung, bei der der Stützkörper die Magnete außen umgibt, ist es zweckmäßig, diesen direkt mit der vorzugsweise hohlen Welle stirnseitig zu verbinden.

Gemäß der Erfindung werden zwei der vorbeschriebenen magnetischen Kupplungsteile zu einer magnetischen Kupplung vereint, die zur Übertragung einer Rotationsbewegung mit einem inneren Kupplungsteil und mit einem äußeren Kupplungsteil versehen ist, die drehbar ineinander angeordnet und magnetisch miteinander antriebsverbunden sind.

Besonders vorteilhaft ist eine solche magnetische Kupplung zur Verbindung zwischen einem Elektromotor und einer Kreiselpumpe vorgesehen, um den Elektromotor gegenüber dem von der Kreiselpumpe geförderten Medium zuverlässig zu isolieren. Eine solche Anordnung hat den Vorteil, dass quasi beliebige Motoren, so auch sogenannte Normmotoren eingesetzt werden können, die vergleichsweise kostengünstig sind, also insoweit auf teure Kleinserien- und Spezialmotoren verzichtet werden kann. Eine solche magnetische Kupplung hat darüber hinaus den Vorteil, dass auf das sonst bei Kreiselpumpen typischerweise vorgesehene Spaltrohr oder die sonst erforderlichen aufwändigen und verschleißanfälligen Dichtungen verzichtet werden kann.

Die Erfindung ist nachfolgend anhand eines in der Zeichnung dargestellten Ausführungsbeispiels näher erläutert. Es zeigen:

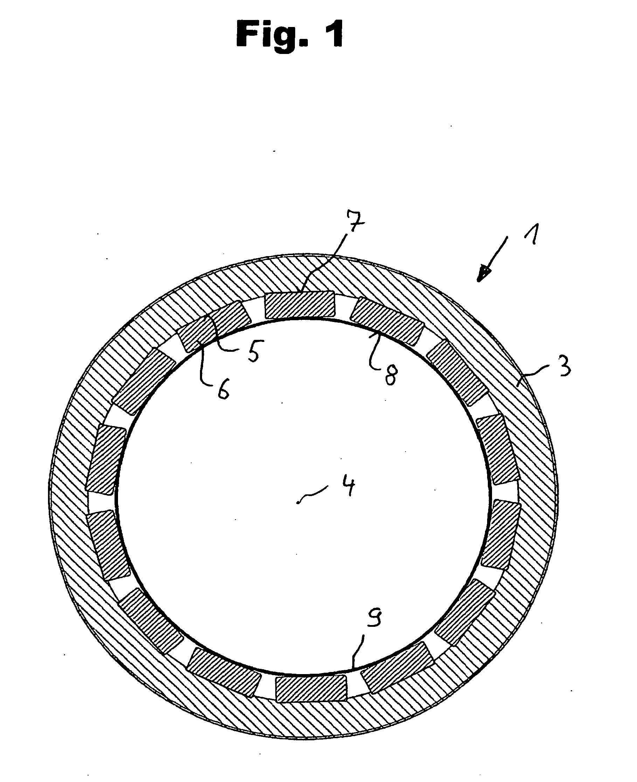

- Fig. 1: einen äußeren Kupplungsteil im Querschnitt,

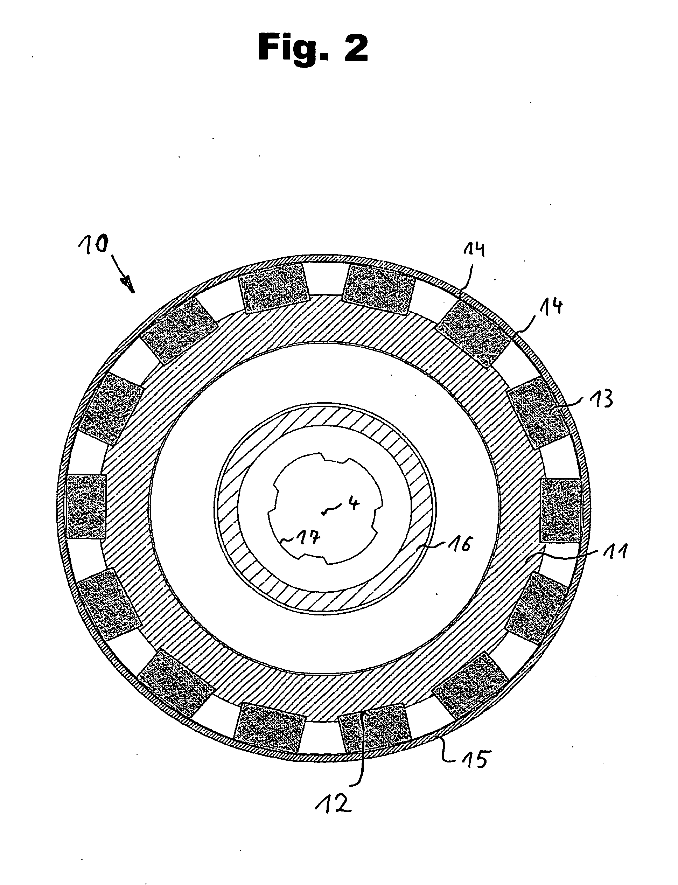

- Fig. 2: einen inneren Kupplungsteil im Querschnitt,
- Fig. 3: einen inneren Kupplungsteil in perspektivischer Ansicht mit teilweise geschnittenem Gehäuse,
- Fig. 4: einen Längsschnitt durch eine Kreiselpumpe mit einer daran angeschlossenen magnetischen Kupplung und
- Fig. 5: die inneren und äußeren Kupplungsteile in Wirkverbindung im Querschnitt.

Ein Außenteil 1 einer magnetischen Kupplung 2 besteht aus einem ringförmigen, äußeren Stützkörper 3, der an seiner Innenseite parallel zur Längsmittelachse 4 angeordnete Nuten 5 aufweist, in denen Magnete 6 angeordnet sind. Durch die Nuten 5 sind die Magnete 6 in gleichem Abstand verteilt über den Innenumfang des Stützkörpers 3 angeordnet. Die Magnete 6 haben rechteckigen Querschnitt und liegen mit ihrer radial nach außen weisenden Flachseite 7 jeweils in einer Nut 5. An der davon abgewandten, nach innen weisenden Flachseite 8 liegen sie an der Innenseite einer inneren Gehäusewand 9 an, die Teil eines die Magnete 6 hermetisch abschließenden Gehäuses bildet. Die innere Gehäusewand 9 drückt die Magnete durch Vorspannung in die Nuten 5. Da die Magnete 6 rechteckige Form haben, ergibt sich an der inneren Gehäusewand 9 eine etwa linienförmige Anlage parallel zur Längsmittelachse 4.

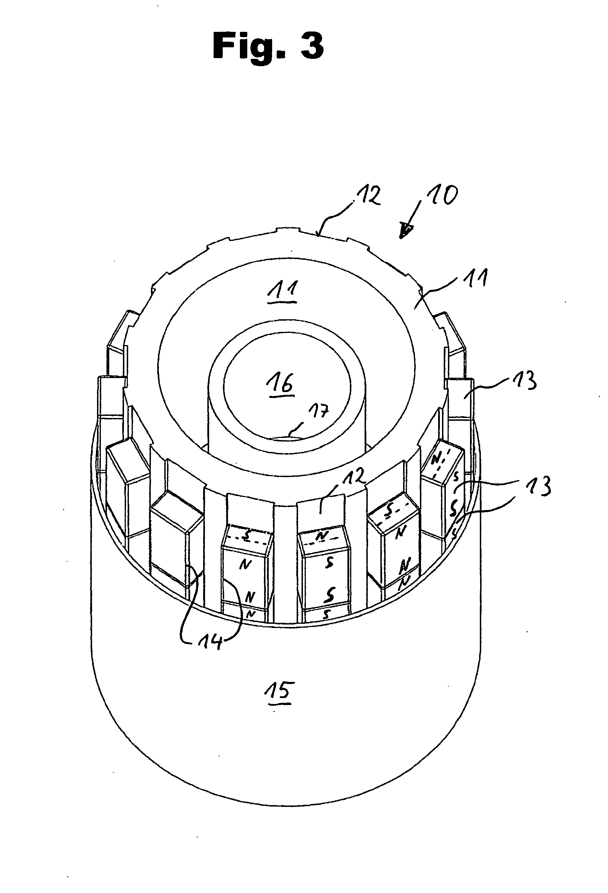

Ein Innenteil 10 der magnetischen Kupplung 2 weist einen Stützkörper 11 auf, der ebenfalls ringförmig ausgebildet ist und über seinen Außenumfang mit parallel zur Längsmittelachse 4 angeordneten Nuten 12 versehen ist, in denen Magnete 13 liegen. Die Magnete 13 entsprechen in ihrer Anzahl der der Magnete 6 und haben ebenfalls rechteckigen Querschnitt. Sie liegen jeweils mit zwei Kanten 14 an der Innenseite einer äußeren Gehäusewand 15 an, die ebenfalls Teil eines die Magnete 13 hermetisch abschließenden Gehäuses bildet und derart vorgespannt ist, dass sie die Magnete 13 kraftschlüssig in die Nuten 12 presst. Der Stützkörper 11 ist ringförmig und mit einem Hohlzylinder 16 verbunden, der mit Abstand innerhalb des Stützkörpers 11 angeordnet ist und über einen Teil seiner Länge mit einem Profil 17 versehen ist, dessen Gegenprofil auf einer Welle sitzt und somit eine Wellen-Nabenverbindung für eine Welle bildet. Der Aufbau des Innenteils 10 im Einzelnen ergibt sich aus Fig. 3.

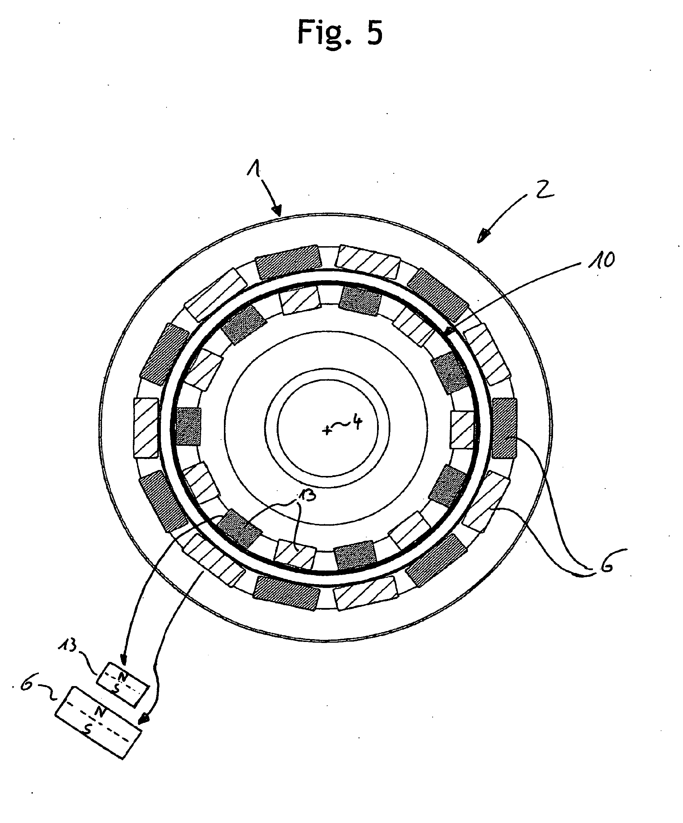

Wie Fig. 3 insbesondere zeigt, liegen in den Nuten 12 mehrere Magnete 13 in Längsrichtung der Nut gesehen hintereinander. Die Magnete 13 sind dabei so angeordnet, dass sie in radialer Richtung magnetisiert sind, d.h. Nordpol und Südpol der einzelnen Magnete sind jeweils in radialer Richtung voneinander beabstandet. Die in Längsrichtung hintereinander in einer Nut 12 angeordneten Magnete sind in ihrer Polarität gleich ausgerichtet, d.h. alle Magnete in einer Nut 12 sind so ausgerichtet, dass ihre Nordpole und ihre Südpole an derselben Seite in radialer Richtung gelegen sind. Dabei wechselt sich die Polarität in Umfangsrichtung nebeneinander liegende Magnete ab, wie durch die Kennzeichnung S für Südpol und N für Nordpol in Fig. 3 dargestellt ist. Das bedeutet in einer Nut sind die Magnete 13 so angeordnet, dass ihr Nordpol radial innen liegend und ihr Südpol radial außen liegend ist, während in den beiden benachbarten Nuten 12 die Magnete so angeordnet sind, dass ihr Südpol radial innen liegend und ihr Nordpol radial außen liegend ist. Die Anordnung der Polaritäten im Zusammenwirken ist anhand von Fig. 5 ersichtlich, in welcher die Kupplung im gekuppelten Zustand, d. h. wenn das Innenteil 10 innerhalb des Außenteils 1 angeordnet und durch die magnetischen Kräfte der Magnete 6 und 13 drehfest mitdiesem verbunden ist. In Figur 5 ist beispielhaft für die Magnete 6 und 13 in einer Ausschnittsvergrößerung die Polung dargestellt. Es ist zu verstehen, dass bei den zu diesen jeweils benachbarten Magneten die Polarität genau umgekehrt ist, d.h. die Nordpole liegen radial außen und die Südpole radial innen. So sind die Magnete in Umfangsrichtung immer abwechselnd gepolt.

Wie Fig. 5 verdeutlicht, weisen sowohl das Außenteil 1 als auch das Innenteil 10 ein hermetisch dichtes Gehäuse auf, so dass die Magnete 6, 13 gegenüber Umwelteinflüssen, insbesondere umgebenden Fluiden zuverlässig geschützt sind. Zwischen der äußeren Gehäusewand 15 des Innenteils 10 und der inneren Gehäusewand 9 des Außenteils 1 ist ein Spalt gebildet, so dass Außen- und Innenteil mechanisch nicht miteinander verbunden sind und nach Überwindung der Magnetkraft zueinander rotierbar sind.

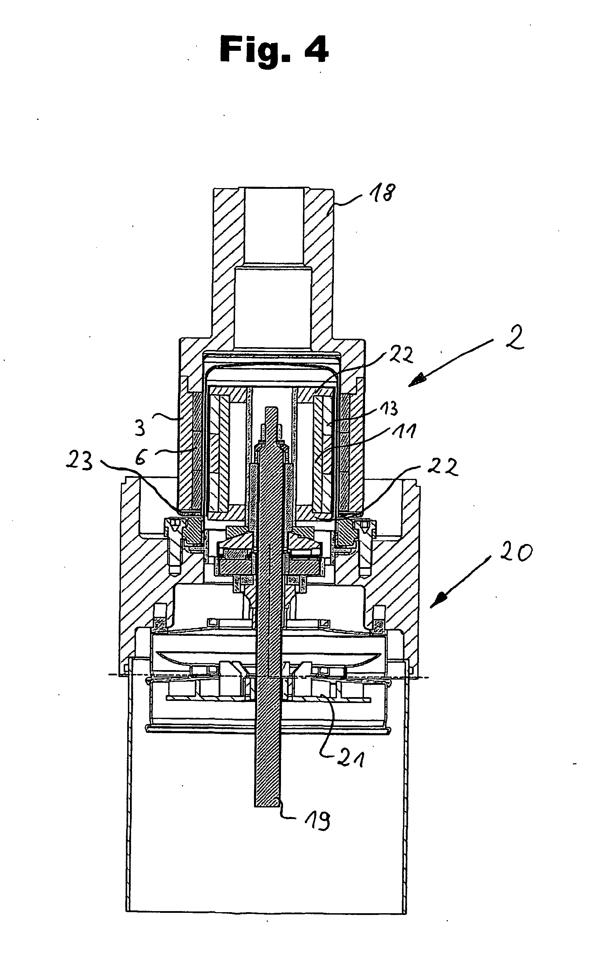

In eingebautem Zustand gemäß Fig. 4 ist die magnetische Kupplung 2 zur berührungsfreien Verbindung zwischen einer Eingangswelle 18 und einer Abtriebswelle 19 vorgesehen. Die Abtriebswelle 19 bildet hier die Antriebswelle einer Kreiselpumpe 20, die hier nicht im Einzelnen dargestellt ist und beschrieben ist. In der Schnittdarstellung erkennbar ist ein Kreiselrad 21. Wie die Schnittdarstellung nach Fig. 4 weiter zeigt, ist der Stützkörper 11 des Innenteils 10 über zwei stirnseitige Ringscheiben 22 mit dem Hohlzylinder 16 verbunden. In der vorstehend beschriebenen Ausführung sind diese Bauteile aus Metall und fest miteinander verschweißt, wobei die Ringscheiben 22 den Stützkörper 11 und die Magnete 13 radial überragen und mit der äußeren Gehäusewand 15 durch Schweißen dicht und fest verbunden sind.

Beim Außenteil 2 hingegen schließt der Stützkörper 3 an seiner von der Pumpe 20 abgewandten Seite unmittelbar an die Hohlwelle 18 an, die in diesem Bereich abgestuft ausgebildet ist. Zur anderen Seite hin ist der Stützkörper 3 des Außenteils 1 mittels einer Ringscheibe 23 abgedeckt, so dass die Magnete 6 in den Nuten 12 auch in Längsrichtung der Nuten formschlüssig gehalten sind. Stützkörper 3, Hohlwelle 18, Ringscheibe 23 und die innere Gehäusewand 9 sind fest und dicht miteinander verschweißt, so dass auch hier die Magnete 6 hermetisch gegenüber Fluideinflüssen abgeschlossen sind.

Bei der dargestellten Kupplung sind die Magnete 6 und 13 vor Montage der Gehäusewände 9 bzw. 15 in den Nuten 5 bzw. 12 durch Einpressen gehalten. Es können jedoch auch Hilfswerkzeuge oder andere Hilfsmittel vorgesehen sein, um diese Stellung während der Montage zu fixieren, die entweder nach Aufbringen und Entspannen der Gehäusewände 9 und 15 entfernt werden oder dort verbleiben.

Die Tiefe der Nuten 5 und 12 ist so gewählt, dass sie maximal 20 % der radialen Erstreckung der zugehörigen Magnete 6 bzw. 13 beträgt, also den Abstand zwischen den Flachseiten 7 und 8. Bei den dargestellten Ausführungsbeispielen beträgt die Nuttiefe 10 % der radialen Erstreckung der Magnete 6 bzw. 13.

### Bezugszeichenliste

- 1 -: Außenteil
- 2 -: magnetische Kupplung
- 3 -: Stützkörper
- 4 -: Längsmittelachse
- 5 -: Nuten
- 6 -: Magnete
- 7 -: nach außen weisende Flachseite
- 8 -: nach innen weisende Flachseite
- 9 -: innere Gehäusewand
- 10 -: Innenteil
- 11 -: Stützkörper
- 12 -: Nuten
- 13 -: Magnete
- 14 -: Kanten
- 15 -: äußeren Gehäusewand
- 16 -: Hohlzylinder
- 17 -: Profil
- 18 -: Eingangswelle
- 19 -: Abtriebswelle
- 20 -: Kreiselpumpe
- 21 -: Kreiselrad
- 22 -: Ringscheiben
- 23 -: Ringscheibe
- N -: Nordpol
- S -: Südpol

## Patentansprüche

1. Magnetische Kupplung (2) zur Übertragung einer Rotationsbewegung, mit einem inneren Kupplungsteil (10) und mit einem äußeren Kupplungsteil (1), die drehbar ineinander angeordnet und magnetisch miteinander antriebsverbunden sind, wobei das innere Kupplungsteil (10) einen inneren Stützkörper (11) und eine äußere Gehäusewand (15) aufweist, zwischen denen quaderförmig ausgebildete Permanentmagnete (13) eingespannt sind und das äußere Kupplungsteil (1) einen äußeren ringförmigen Stützkörper (3) und eine innere Gehäusewand (9) aufweist, zwischen denen quaderförmig ausgebildete Permanentmagnete (6) eingespannt sind, die mit ihren nach innen weisenden Flächen (8) an der inneren Gehäusewand (9) des äußeren Kupplungsteils (1) anliegen, wobei im inneren Stützkörper (11) und im äußeren Stützkörper (3) Nuten (5, 12) zur formschlüssigen Aufnahme der Magnete (6, 13) ausgebildet sind und in einer Nut (5, 12) zwei oder mehr Magnete (6, 13) in Längsrichtung der Nut (5, 12) hintereinander angeordnet sind, wobei alle Magnete (6, 13) in einer Nut (5, 12) in gleiche Richtung gepolt sind.

2. Magnetische Kupplung nach Anspruch 1, **dadurch gekennzeichnet, dass** der innere Stützkörper (11) ringförmig ausgebildet ist.

3. Magnetische Kupplung nach Anspruch 1 oder 2, **dadurch gekennzeichnet, dass** der Stützkörper (3, 11) magnetisch leitend ausgebildet ist.

4. Magnetische Kupplung nach einem der vorhergehenden Ansprüche, **dadurch gekennzeichnet, dass** die Magnete (13) des inneren Kupplungsteils (10) mit zwei äußeren Kanten (14) an der Innenseite der äußeren Gehäusewand (15) des inneren Kupplungsteils (10) anliegen.

5. Magnetische Kupplung nach einem der vorhergehenden Ansprüche, **dadurch gekennzeichnet, dass** die Magnete (6, 13) in Umfangsrichtung durch elastische Stege beabstandet und gehalten sind.

6. Magnetische Kupplung nach Anspruch 5, **dadurch gekennzeichnet, dass** die elastischen Stege fest mit dem Stützkörper (3, 11) verbunden sind.

7. Magnetische Kupplung nach Anspruch 5 oder 6, **dadurch gekennzeichnet, dass** die elastischen Stege mit dem Stützkörper (3, 11) einstückig als Kunststoffspritzteil ausgebildet sind.

8. Magnetische Kupplung nach einem der vorhergehenden Ansprüche 8 - 10, **dadurch gekennzeichnet, dass** ein Magnet (6, 13) mit maximal 20% seiner radialen Erstreckung innerhalb der Nut (5, 12) liegt.

9. Magnetische Kupplung nach einem der vorhergehenden Ansprüche, **dadurch gekennzeichnet, dass** die Gehäusewand (9, 15) Teil eines die Magnete (6, 13) und den Stützkörper (3, 11) hermetisch umgebenden Gehäuses ist.

10. Magnetische Kupplung nach Anspruch 9, **dadurch gekennzeichnet, dass** das Gehäuse aus Edelstahlblech gebildet ist.

11. Magnetische Kupplung nach einem der vorhergehenden Ansprüche, **dadurch gekennzeichnet, dass** der Stützkörper (3, 11) drehfest mit einer Welle (18, 19) verbunden ist.

12. Magnetische Kupplung nach einem der vorhergehenden Ansprüche, **dadurch gekennzeichnet, dass** sie die Verbindung zwischen einem Elektromotor und einer Kreiselpumpe (20) bildet.

## Claims

1. A magnetic coupling (2) for the transmission of a rotation movement, with an inner coupling part (10) and with an outer coupling part (1), which are arranged into one another in a rotatable manner and are magnetically drive-connected to one another, wherein the inner coupling part (10) comprises an inner support body (11) and an outer housing wall (15), between which permanent magnets (13) designed in a parallelepiped manner are clamped and the outer coupling part (1) comprises an outer annular support body (3) and an inner housing wall (9), between which permanent magnets (6) designed in a parallelepiped manner are clamped, said permanent magnets with their inwardly facing surfaces (8) bearing on the inner housing wall (9) of the outer coupling part (1), wherein grooves (5, 12) are provided in the inner support body (11) and in the outer support body (3), for the positive-fit receiving of the magnets (6, 13), and two or more magnets (6, 13) are arranged in a groove (5, 12) one after the other in the longitudinal direction of the groove (5, 12), wherein all magnets (6, 13) in a groove (5, 12) are poled in the same direction.

2. A magnetic coupling according to claim 1, **characterised in that** the inner support body (11 is designed in an annular manner.

3. A magnetic coupling according to claim 1 or 2, **characterised in that** the support body (3, 11) is designed in a magnetically conductive manner.

4. A magnetic coupling according to one of the preceding claims, **characterised in that** the magnets (13) of the inner coupling part (10) with two outer edges (14) bear on the inner side of the outer housing wall (15) of the inner coupling part (10).

5. A magnetic coupling according to one of the preceding claims, **characterised in that** the magnets (6, 13) are distanced and held in the peripheral direction by way of elastic webs.

6. A magnetic coupling according to claim 5, **characterised in that** the elastic webs are fixedly connected to the support body (3, 11).

7. A magnet coupling according to claim 5 or 6, **characterised in that** the elastic webs with the support body (3, 11) are designed as one piece as a plastic injection moulded part.

8. A magnetic coupling according to one of the preceding claims, **characterised in that** a magnet (6, 13) lies with maximally 20 % of its radial extension within the groove (5, 12).

9. A magnetic coupling according to one of the preceding claims, **characterised in that** the housing wall (9, 15) is part of a housing which hermetically surrounds the magnets (6, 13) and the support body (3, 11).

10. A magnetic coupling according to claim 9, **characterised in that** the housing is formed of stainless steel sheet.

11. A magnetic coupling according to one of the preceding claims, **characterised in that** the support body (3, 11) is connected to a shaft (18, 19) in a rotationally fixed manner.

12. A magnetic coupling according to one of the preceding claims, **characterised in that** it forms the connection between an electric motor and a centrifugal pump (20).

## Revendications

1. Accouplement magnétique (2) destiné au transfert d'un mouvement de rotation, comprenant une partie d'accouplement intérieure (10) et une partie d'accouplement extérieure (1) montées en rotation l'une dans l'autre et reliées entre elles magnétiquement par entraînement, la partie d'accouplement intérieure (10) présentant un corps d'appui intérieur (11) et une paroi de carter extérieure (15), entre lesquels sont encastrés des aimants permanents (13) de forme parallélépipédique, et la partie d'accouplement extérieure (1) présentant un corps d'appui extérieur (3) annulaire et une paroi de carter intérieure (9), entre lesquels sont encastrés des aimants permanents (6) de forme parallélépipédique qui, par leurs faces (8) tournées vers l'intérieur, reposent sur la paroi de carter intérieure (9) de la partie d'accouplement extérieure (1), des rainures (5, 12) étant formées dans le corps d'appui intérieur (11) et dans le corps d'appui extérieur (3) pour loger par complémentarité de forme les aimants (6, 13), et deux aimants (6, 13) ou plus étant disposés les uns à la suite des autres dans une rainure (5, 12), dans la direction longitudinale de la rainure (5, 12), tous les aimants (6, 13) logés dans une rainure (5, 12) étant polarisés dans la même direction.

2. Accouplement magnétique selon la revendication 1, **caractérisé en ce que** le corps d'appui intérieur (11) est de forme annulaire.

3. Accouplement magnétique selon la revendication 1 ou 2, **caractérisé en ce que** le corps d'appui (3, 11) est exécuté de façon à être magnétiquement conducteur.

4. Accouplement magnétique selon l'une des revendications précédentes, **caractérisé en ce que** les aimants (13) de la partie d'accouplement intérieure (10) reposent par deux bords extérieurs (14) sur la face intérieure de la paroi de carter extérieure (15) de la partie d'accouplement intérieure (10).

5. Accouplement magnétique selon l'une des revendications précédentes, **caractérisé en ce que** les aimants (6, 13) sont espacés et maintenus dans la direction circonférentielle par des traverses élastiques.

6. Accouplement magnétique selon la revendication 5, **caractérisé en ce que** les traverses élastiques sont reliées de manière fixe au corps d'appui (3, 11).

7. Accouplement magnétique selon la revendication 5 ou 6, **caractérisé en ce que** les traverses élastiques sont réalisées d'un seul tenant avec le corps d'appui (3, 11) sous forme de pièce moulée par injection de matière plastique.

8. Accouplement magnétique selon l'une des revendications précédentes, **caractérisé en ce qu'**un aimant (6, 13) est logé à l'intérieur de la rainure (5, 12) à hauteur de 20% maximum de son étendue radiale.

9. Accouplement magnétique selon l'une des revendications précédentes, **caractérisé en ce que** la paroi de carter (9, 15) est une partie d'un carter entourant hermétiquement les aimants (6, 13) et le corps d'appui (3, 11).

10. Accouplement magnétique selon la revendication 9, **caractérisé en ce que** le carter est formé de tôle en acier spécial.

11. Accouplement magnétique selon l'une des revendications précédentes, **caractérisé en ce que** le corps d'appui (3, 11) est relié solidairement en rotation à un arbre (18, 19).

12. Accouplement magnétique selon l'une des revendications précédentes, **caractérisé en ce qu'**il constitue la liaison entre un moteur électrique et une pompe centrifuge (20).
